# EUROPÄISCHE PATENTSCHRIFT

(11) **EP 1 153 820 B1**
(45) Veröffentlichungstag und Bekanntmachung des Hinweises auf die Patenterteilung: **22.03.2006**
(21) Anmeldenummer: 01110515.2
(22) Anmeldetag: 28.04.2001
(51) Int. Cl.: B62D 25/06, B62D 27/02

(54) **Fahrzeugdach mit einem Dachmodul und Verfahren zur Herstellung eines solchen Dachmoduls**
Vehicle roof with roof module and method for making such a module
Toit de véhicule comportant un module de toit et procédé pour fabriquer un tel module

(30) Priorität: 11.05.2000 DE 10022915
(43) Veröffentlichungstag der Anmeldung: 14.11.2001
(73) Patentinhaber: Webasto Vehicle Systems International GmbH, 82131 Stockdorf (DE)
(72) Erfinder: Seifert, Wolfgang, 82110 Germering (DE)
(74) Vertreter: Wiese, Gerhard

(56) Entgegenhaltungen:
- EP-A- 0 995 667
- DE-A- 2 854 766
- DE-A- 3 725 807
- DE-A- 19 709 016
- DE-A- 19 825 603
- US-A- 2 987 345

## Beschreibung

Die vorliegende Erfindung betrifft ein Fahrzeugdach mit einem Dachmodul. Die Erfindung betrifft femer ein Verfahren zur Herstellung eines Dachmoduls.

Aus der DE 32 22 419 C2 ist ein Fahrzeugdach bekannt, bei dem eine Dachhaut aus Blech an den Seitenrändern nach unten abgekröpft und zusätzlich nach außen abgewinkelt ist Der dadurch entstehende horizontale Auflagebereich dient zum Befestigen an einem Tragrand der Fahrzeugkarosserie.

Aus der US 4,358,883 ist ein weiteres Fahrzeugdach bekannt, bei dem eine Dachhaut aus Kunststoff im Bereich ihrer Seitenrandes nach unten abgekröpft und auf eine vertikale Seitenwand der Fahrzeugkarosserie aufgesetzt ist.

Das beispielsweise mit Innenhimmel vollständig vormontierte Dachmodul des Fahrzeugdachs der eingangs genannten Art wird beispielsweise auf die flachen Tragränder des Dachrahmenbereichs der Fahrzeugkarosserie geklebt. Zu diesem Zweck wird im einfachsten Fall die Dachhautschweißung herkömmlicher Fahrzeugdächer durch eine Verklebung ersetzt. Zu diesem Zweck werden ähnlich wie bei der DE 32 22 419 C2 die Seitenränder des Dachmoduls nach unten und außen gebogen, und der nach außen gebogene Abschnitt des Dachmodulseitenrands wird mit den flachen Tragrändern des Dachrahmenbereichs verklebt. Nachteilig hierbei ist, daß die dabei zwischen Seitenholm der Fahrzeugkarosserie und Dachhaut des Dachmoduls entstehende Fuge relativ breit wird und eine zusätzliche Abdeckleiste erfordert.

Geringere Fugenbreiten werden beispielsweise im Fall eines Fahrzeugdachs mit einem Dachmodul erzielt, bei welchem die Dachhaut des Dachmoduls mit nach unten gebogenen Seitenrändern vollflächig unterschäumt ist, wobei der Außenrand dieser Unterschäumung zur Verklebung des Dachmoduls mit dem Dachrahmenbereich der Fahrzeugkarosserie dient. Nachteilig hierbei ist, daß die flächige Unterschäumung mit relativ hohen Kosten und einem relativ hohen Gewicht verbunden ist, die zu dem Gewicht der Dachhaut hinzukommt, die üblicherweise aus Blech oder einer Kunststoffolie besteht.

Die DE 197 09 016 A1 offenbart ein Fachzeugdach gemäß dem Oberbegriff des Anspruchs 1, mit einem Dachmodul zur Befestigung an einem Dachrahmenbereich einer Fahrzeugkarosserie, wobei das Fachzeugdach Seitenholme aufweist, mit einwärts an die Seitenholme der Fahrzeugkarosserie anschließenden Tragrändern für das Dachmodul, dessen Dachhaut nach unten auf die Tragränder umgebogene Seitenränder aufweist, wobei im Bereich der Seitenränder der Dachhaut Verstärkungsteile in Form eines durchgehenden Profils angeordnet sind, die Unterseiten zur Befestigung mit den Tragrändern des Dachrahmenbereichs aufweisen. Die Verstärkungsteile sind beabstandet von der Dachhaut in eine Schaumstoffschicht eingebettet, die sich an der Unterseite der Dachhaut befindet. Die Schaumstoffschicht erhöht das Gewicht des Fahrzeugdaches, und der Vorgang des Einbettens der Verstärkungsteile in die Schaumstoffschicht stellt einen eigenen Arbeitsschritt dar und erhöht somit die Herstellungskosten.

Angesichts dieses Standes der Technik liegt der Erfindung die Aufgabe zugrunde, ein Fahrzeugdach der eingangs genannten Art sowie ein Verfahren zur Herstellung eines Dachmoduls zu schaffen, bei dem das Dachmodul leichtgewichtig und dennoch stabil ist, kostengünstig hergestellt werden kann, und eine geringe Fugenbreite zwischen Seitenholmen der Fahrzeugkarosserie und der Dachhaut des Dachmoduls gewährleistet ist.

Gelöst wird diese Aufgabe durch ein Fahrzeugdach mit den Merkmalen des Anspruchs 1. Vorteilhafte Weiterbildungen der Erfindung sind in den Unteransprüchen angegeben.

Die Dachhaut des Dachmoduls des erfindungsgemäßen Fahrzeugdachs kann unter Gewährleistung einer geringen Fugenbreite zwischen der Dachhaut und den sich seitlich anschließenden Seitenholmen der Fahrzeugkarosserie am Dachrahmenbereich befestigt werden, weil die hierzu erforderlichen Klebeflächen durch die Unterseiten der beiderseits auf die Unterseite der

Dachhaut angebrachten Verbindungsleisten bereitgestellt werden. Diese Verbindungsleisten besitzen im Vergleich zum restlichen Dachmodul geringe Masse und tragen dadurch zum Gesamtgewicht des Dachmoduls nur unerheblich bei. Aufgrund des geringen Materialeinsatzes, der für die Verbindungsleisten erforderlich ist, stellen diese außerdem eine kostengünstige Maßnahme zur Verbindung des Dachmoduls mit den Dachrahmenbereich der Fahrzeugkarosserie im Gegensatz zu dem eingangs genannten Stand der Technik mit einer vollständigen Unterschäumung der Dachhaut des Dachmoduls dar.

Zur Gewährleistung einer zuverlässigen Verbindung zwischen Dachmodul und Dachrahmenbereich der Fahrzeugkarosserie verlaufen die Unterseiten der Verbindungsleisten bevorzugt im wesentlichen parallel zu den flachen Tragrändern des Dachrahmenbereichs.

Zur Verklebung des Dachmoduls über seine seitlichen Verbindungsleisten mit dem Dachrahmenbereich dienen bevorzugt Kleberaupen, die auf die Unterseiten der Verbindungsleisten aufgebracht sind.

Die Verbindungsleisten können in unterschiedlicher Weise ausgebildet und mit der Dachhaut des Dachmoduls verbunden sein. Zugunsten einer stabilen Verbindung zwischen Verbindungsleisten und Dachhaut sind die Verbindungsleisten an die Unterseite der Dachhaut und/oder die Innenseite deren umgebogener Seitenränder angeformt. In diesem Fall bestehen die Verbindungsleisten bevorzugt aus Kunststoff- oder Metallschaum, vor allem Aluminiumschaum.

Die Erfindung ist nicht nur auf ein Dachmodul mit seitlichen Verbindungsrändern beschränkt, sondern kann auch auf ein Dachmodul angewendet werden, das umlaufende nach unten umgebogene Ränder umfaßt, die mit umlaufenden Tragrändern des Dachrahmenbereichs über ebenfalls umlaufende gebildete Verbindungsleisten am Außenrand der Dachhaut verbunden sind.

Die Verbindungsleisten des erfindungsgemäßen Fahrzeugdachs können in unterschiedlicher Weise im Dachmodul ausgebildet werden. Ein vorteilhaftes Verfahren sieht erfindungsgemäß vor, daß die Verbindungsleisten an die Unterseite der Dachhaut und/oder die Innenseite von deren umgebogenen Seitenränder angeschäumt werden. Eine Alternative stellt ein Verfahren dar, bei der das Anschäumen durch Anspritzen ersetzt ist. Als Abwandlung hiervon können die Verbindungsleisten durch Extrusion mit der Dachhaut und/oder deren umgebogenen Seitenränder gebildet werden. Zur Anbringung der Verbindungsleisten bzw. deren Herstellung eignet sich jedoch auch ein Tape-Legeprozeß, bei dem die Verbindungsleisten in Gestalt von Bändern an die Unterseite der Dachhaut und/oder die Innenseite der umgebogenen Seitenränder der Dachaut angelegt werden.

Die erfindungsgemäßen Verbindungsleisten eignen sich vor allem dann, wenn sie in Gestalt von Schaummaterial gebildet sind, auch zur Vormontage eines Fahrzeugdachhimmels oder anderer Bauteile, wie etwa Elektrokabel durch Vorsehen entsprechender Aufnahmen in den Verbindungsleisten und/oder Einformen derselben oder der Bauteile.

Nachfolgend wird die Erfindung anhand von Zeichnungen beispielhaft näher erläutert; es zeigen:
- Fig. 1: eine Draufsicht auf das lediglich teilweise schematisch dargestellte Dachmodul eines erfindungsgemäßen Fahrzeugdachs,
- Fig. 2: eine Schnittdarstellung des in den Dachrahmenbereich eingesetzten Dachmoduls von Fig. 1 entlang der Linie B1,
- Fig. 3: eine Schnittdarstellung des in den Dachrahmenbereich eingesetzten Dachmoduls von Fig. 1 entlang der Linie B2,
- Fig. 4: eine Schnittdarstellung des in den Dachrahmenbereich eingesetzten Dachmoduls von Fig. 1 entlang der Linie B3.

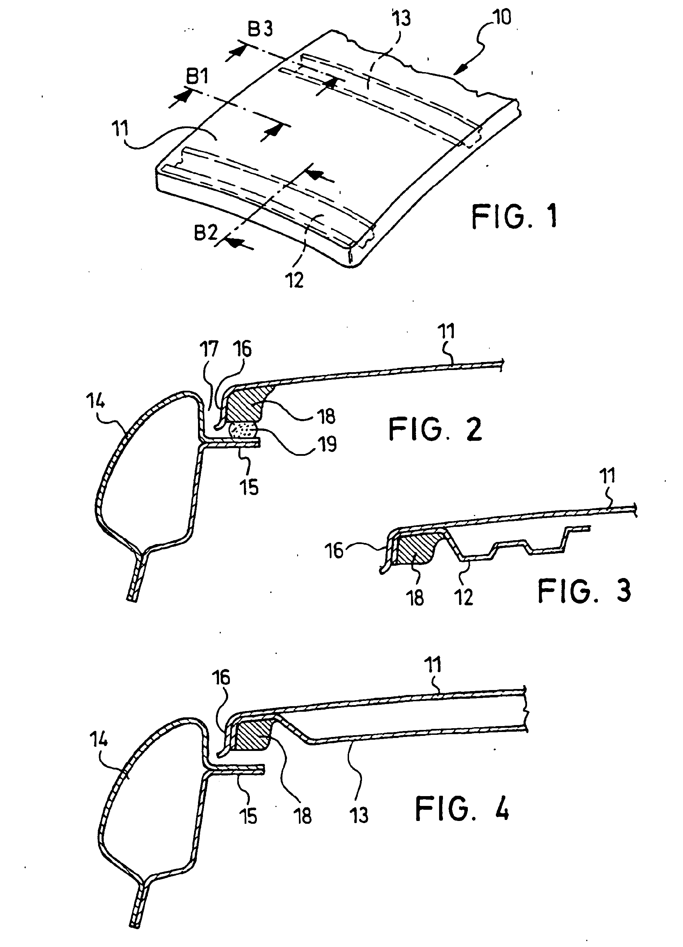

Ein Dachmodul 10 eines Fahrzeugdachs (siehe Fig. 1) ist an den üblicherweise gewölbten Verlauf des Fahrzeugdachs angepaßt und umfaßt eine außenliegende Dachhaut 11,vorzugsweise aus Blech oder Kunststoff und als Versteifung mehrere quer an der Unterseite der Dachhaut 11 verlaufende Dachspriegel, von denen in Fig. 1 ein vorderer Dachspriegel 12 und ein mittlerer Dachspriegel 13 gezeigt sind.

Das im Umriß rechteckige Dachmodul 10 wird in eine entsprechende rechteckige Ausnehmung in das Fahrzeugdach angrenzend an Seitenholme 14 der Fahrzeugkarosserie eingesetzt. Bei den Seitenholmen 14 handelt es sich um Blechprofilteile. Jeder der Seitenholme 14, beispielsweise der in Fig. 2 und 4 gezeigte Seitenholm 14, hat einen innenliegenden Dachrahmenbereich in Gestalt eines flachen Tragrands 15, der dazu dient, das Dachmodul 10 seitlich abzustützen und der bei herkömmlichen Fahrzeugdachkonstruktionen dazu dient, mit der Dachhaut des Dachmoduls verschweißt zu werden. Im Falle des hier beschriebenen Ausführungsbeispiels des Fahrzeugdachs mit dem Dachmodul 10 ist nicht die Verschweißung der Dachhaut 11 mit dem Tragrand 15 des Dachrahmenbereichs vorgesehen, sondern eine Verklebung der Dachhaut 11 des Dachmoduls 10 mit den seitlichen Tragrändern 15. Die vorzugsweise aus Blech bestehende Dachhaut 11 ist an ihren Seitenrändern nach unten umgebogen, so daß die Dachhaut 11 im Querschnitt in etwa eine U-Form besitzt. Zwischen jedem Seitenrand 16 und dem zugehörigen Seitenholm 11 verbleibt eine Fuge 17, die möglichst schmal gebildet ist. Um dies zu gewährleisten, sind an der Unterseite der Dachhaut 11 im Bereich ihrer Seitenränder Verbindungsleisten 18 vorgesehen.

Die Verbindungsleiste 18 ist bevorzugt an die Unterseite der Dachhaut 11 und die Innenseite des Seitenrands 16 angeschäumt und damit fest mit der Dachhaut 11 verbunden. Jede Verbindungsleiste 18 erstreckt sich zumindest über beide Seitenränder des Dachmoduls 10, bevorzugt jedoch auch im Bereich der vorderen und hinteren Rändern sowie der Versteifungen der Dachhaut 11 (beispielsweise des vorderen Dachspriegels 12 und des mittigen Dachspriegels 13). Die Höhe der Verbindungsleiste 18 entspricht in etwa der Höhe des Seitenrands 16. Bei der dargestellten Ausführungsform endet die Verbindungsleiste 18 zurückgesetzt vom unteren Ende des Seitenrands 16 in einer Fläche, die im wesentlichen parallel zum Tragrand 15 verläuft. Diese Unterseite der Verbindungsleiste 18 dient zur Verklebung der Dachhaut 11 mit dem Tragrand 15. Diesem Zweck dient eine Kleberaupe 19 zwischen der Unterseite der Verbindungsleiste 18 und der Oberseite des Tragrands 15. Aufgrund seiner funktionsgemäß geringen Höhe und geringen Breite besitzt die Verbindungsleiste 18 geringe Masse und trägt damit nicht wesentlich zum Gewicht des Dachmoduls 10 bei. Sie ist leichter und exakter herstellbar als eine zusätzliche nach innen oder außen gerichtete zusätzliche horizontale Abkantung des Seitenrandes 16.

In den Verbindungsleisten können auch Aufnahmen zur demontierbaren Vormontage des Innenhimmels oder anderer Bauteile, wie etwa Elektrokabel vorgesehen sein. Diese Bauteile können bei der Herstellung des Dachmoduls auch in die Verbindungsleisten eingebettet werden, wenn die Verbindungsleisten beispielsweise an die Dachhaut 11 aufgeschäumt, an diese gespritzt oder im Tape-Legeprozeß angelegt und dadurch angeklebt werden. Als Material für die Verbindungsleisten 18 kommt Kunststoff ebenso wie Aluminiumschaum in Betracht.

Die Unterseiten der Verbindungsleisten 18 können abweichend von der Darstellung in den Fign. 1 bis 4 bündig mit den Seitenrändern 16 angeordnet sein oder auch geringfügig über diese nach unten vorstehen.

### Bezugszeichenliste

- 10: Dachmodul
- 11: Dachhaut
- 12: vorderer Dachspriegel
- 13: mittiger Dachspriegel
- 14: Seitenholm
- 15: Tragrand
- 16: Seitenrand
- 17: Fuge
- 18: Verbindungsleiste
- 19: Kleberaupe

## Patentansprüche

1. Fachzeugdach mit einem Dachmodul (10) zur Befestigung an einem Dachrahmenbereich einer Fahrzeugkarosserie, wobei das Fachzeugdach Seitenholme (14) aufweist, mit einwärts an die Seitenholme (14) der Fahrzeugkarosserie anschließenden Tragrändern (15) für das Dachmodul (10), dessen Dachhaut (11) nach unten auf die Tragränder (15) umgebogene Seitenränder (16) aufweist, wobei im Bereich der Seitenränder (16) der Dachhaut (11) Verbindungsleisten (18) angeordnet sind, die Unterseiten zur Befestigung mit den Tragrändern (15) des Dachrahmenbereichs aufweisen,
**dadurch gekennzeichnet, daß** das Dachmodul (10) als Versteifung wenigstens einen quer an der Unterseite der Dachhaut (11) verlaufenden Dachspriegel (12, 13) aufweist, und daß der bzw. die Dachspriegel (12, 13) im Bereich der Seitenränder (16) des Dachmoduls (10) von den sich ausschließlich in den Randbereichen des Dachmoduls erstreckenden Verbindungsleisten (18) abgedeckt sind.

2. Fahrzeugdach nach Anspruch 1, **dadurch gekennzeichnet, daß** die Unterseiten der Verbindungsleisten (18) im wesentlichen parallel zu horizontal angeordneten Tragrändern (15) des Dachrahmenbereichs verlaufen.

3. Fahrzeugdach nach Anspruch 1 oder 2, **dadurch gekennzeichnet, daß** die Unterseiten der Verbindungsleisten (18) mit Kleberaupen (19) versehen sind.

4. Fahrzeugdach nach Anspruch 1, 2 oder 3, **dadurch gekennzeichnet, daß** die Verbindungsleisten (18) an die Unterseite der Dachhaut (11) und/oder die Innenseite der umgebogenen Seitenränder (16) angeformt sind.

5. Fahrzeugdach nach Anspruch 4, **dadurch gekennzeichnet, daß** die Verbindungsleisten (18) aus Aluminiumschaum bestehen.

6. Fahrzeugdach nach Anspruch 1, 2 oder 3, **dadurch gekennzeichnet, daß** die Dachhaut (11) des Dachmoduls (10) umlaufend nach unten umgebogene Ränder sowie umlaufend Verbindungsleisten (18) zum Zusammenwirken mit umlaufenden Tragrändern (15) des Dachrahmenbereichs umfaßt.

7. Verfahren zur Herstellung eines Dachmoduls für ein Fahrzeugdach nach einem der Ansprüche 4 bis 6, **dadurch gekennzeichnet, daß** die Verbindungsleisten (18) an die Unterseite der Dachhaut (11) und/oder die Innenseite der umgebogenen Seitenränder (16) angeschäumt werden.

8. Verfahren zur Herstellung eines Dachmoduls für ein Fahrzeugdach nach einem der Ansprüche 4 bis 6, **dadurch gekennzeichnet, daß** die Verbindungsleisten (18) an die Unterseite der Dachhaut (11) und/oder die Innenseite der umgebogenen Seitenränder (16) angespritzt werden.

9. Verfahren zur Herstellung eines Dachmoduls für ein Fahrzeugdach nach einem der Ansprüche 4 bis 6, **dadurch gekennzeichnet, daß** die Verbindungsleisten (18) an die Unterseite der Dachhaut (11) und/oder die Innenseite der umgebogenen Seitenränder (16) durch Extrusion angeformt werden.

10. Verfahren zur Herstellung eines Dachmoduls für ein Fahrzeugdach nach einem der Ansprüche 4 bis 6, **dadurch gekennzeichnet, daß** die Verbindungsleisten (18) an die Unterseite der Dachhaut (11) und/oder die Innenseite der umgebogenen Seitenränder (16) als Bänder angelegt und angeklebt werden (Tape-Legeprozeß).

## Claims

1. Vehicle roof having a roof module (10) for fixing to a roof frame region of a vehicle body, the vehicle roof having lateral spars (14) with supporting edges (15), adjoining the lateral spars (14) of the vehicle body inwards, for the roof module (10), whose roof skin (11) has side edges (16) that are bent over downwards onto the supporting edges (15), connecting strips (18) being arranged in the region of the side edges (16) of the roof skin (11) and having undersides to fix to the supporting edges (15) of the roof frame region,
**characterized in that** the roof module (10) has, as reinforcement, at least one roof slat (12, 13) running transversely on the underside of the roof skin (11), and **in that** the roof slat or slats (12, 13) is/are covered in the region of the side edges (16) of the roof module (10) by connecting strips (18) extending only in the edge regions of the roof module.

2. Vehicle roof according to Claim 1, **characterized in that** the undersides of the connecting strips (18) run substantially parallel to horizontally arranged supporting edges (15) of the roof frame region.

3. Vehicle roof according to Claim 1 or 2, **characterized in that** the undersides of the connecting strips (18) are provided with beads of adhesive (19).

4. Vehicle roof according to Claim 1, 2 or 3,
**characterized in that** the connecting strips (18) are integrally moulded on the underside of the roof skin (11) and/or the inside of the bent-over side edges (16).

5. Vehicle roof according to Claim 4, **characterized in that** the connecting strips (18) consist of aluminium foam.

6. Vehicle roof according to Claim 1, 2 or 3,
**characterized in that** the roof skin (11) of the roof module (10) comprises edges bent over downwards circumferentially and also circumferential connecting strips (18) to interact with circumferential supporting edges (15) of the roof frame region.

7. Method for making a roof module for a vehicle roof according to one of Claims 4 to 6, **characterized in that** the connecting strips (18) are foamed onto the underside of the roof skin (11) and/or the inside of the bent-over side edges (16).

8. Method for making a roof module for a vehicle roof according to one of Claims 4 to 6, **characterized in that** the connecting strips (19) are injection-moulded onto the underside of the roof skin (11) and/or the inside of the bent-over side edges (16).

9. Method for making a roof module for a vehicle roof according to one of Claims 4 to 6, **characterized in that** the connecting strips (18) are integrally moulded by means of extrusion onto the underside of the roof skin (11) and/or the inside of the bent-over side edges (16).

10. Method for making a roof module for a vehicle roof according to one of Claims 4 to 6, **characterized in that** the connecting strips (18) are placed on the underside of the roof skin (11) and/or the inside of the bent-over side edges (16) as tapes and are adhesively bonded on (tape-laying process).

## Revendications

1. Toit de véhicule avec un module de toit (10) pour la fixation à une zone de cadre de toit d'une carrosserie de véhicule, le toit du véhicule comportant des longerons latéraux (14), avec des bords de support (15) adjacents aux longerons latéraux (14) de la carrosserie du véhicule vers l'intérieur pour le module de toit (10), dont la couverture de toit (11) comporte des bords latéraux (16) cintrés vers le bas sur les bords de support (15), des barres de liaison (18), comportant des faces inférieures pour la fixation aux bords de support (15) de la zone du cadre de toit, étant disposées dans la zone des bords latéraux (16) de la couverture de toit (11),
**caractérisé en ce que** le module de toit (10) comporte comme renforcement au moins un arceau de toit (12, 13) s'étendant perpendiculairement sur la face inférieure de la couverture de toit (11) et **en ce que** l'arceau et/ou les arceaux de toit (12, 13) dans la zone des bords latéraux (16) du module de toit (10) sont recouverts par les barres de liaison (18) qui s'étendent exclusivement dans les zones de bord du module de toit.

2. Toit de véhicule selon la revendication 1, **caractérisé en ce que** les faces inférieures des barres de liaison (18) sont pour l'essentiel parallèles à des bords de support (15) de la zone du cadre de toit disposés horizontalement.

3. Toit de véhicule selon la revendication 1 ou 2, **caractérisé en ce que** les faces inférieures des barres de liaison (18) sont dotées de bourrelets adhésifs (19).

4. Toit de véhicule selon la revendication 1, 2 ou 3, **caractérisé en ce que** les barres de liaison (18) sont formées sur la face inférieure de la couverture de toit (11) et/ou sur la face intérieure des bords latéraux cintrés (16).

5. Toit de véhicule selon la revendication 4, **caractérisé en ce que** les barres de liaison (18) sont en mousse d'aluminium.

6. Toit de véhicule selon la revendication 1, 2 ou 3, **caractérisé en ce que** la couverture de toit (11) du module de toit (10) comprend sur tout le pourtour des bords cintrés vers le bas ainsi que des barres de liaison (18) permettant une action conjointe avec des bords de support (15) présents sur tout le pourtour de la zone du cadre de toit.

7. Procédé pour la fabrication d'un module de toit pour un toit de véhicule selon une des revendications 4 à 6, **caractérisé en ce que** les barres de liaison (18) sont mises en place par moussage sur la face inférieure de la couverture de toit (11) et/ou sur la face intérieure des bords latéraux cintrés (16).

8. Procédé pour la fabrication d'un module de toit pour un toit de véhicule selon une des revendications 4 à 6, **caractérisé en ce que** les barres de liaison (18) sont mises en place par injection sur la face inférieure de la couverture de toit (11) et/ou sur la face intérieure des bords latéraux cintrés (16).

9. Procédé pour la fabrication d'un module de toit pour un toit de véhicule selon une des revendications 4 à 6, **caractérisé en ce que** les barres de liaison (18) sont formées par extrusion sur la face inférieure de la couverture de toit (11) et/ou sur la face intérieure des bords latéraux cintrés (16).

10. Procédé pour la fabrication d'un module de toit pour un toit de véhicule selon une des revendications 4 à 6, **caractérisé en ce que** les barres de liaison (18) sont mises contre et collées sous forme de bandes (processus de mise en place « Tape ») sur la face inférieure de la couverture de toit (11) et/ou sur la face intérieure des bords latéraux cintrés (16).
